# EUROPÄISCHE PATENTSCHRIFT

(11) **EP 0 644 009 B1**
(45) Veröffentlichungstag und Bekanntmachung des Hinweises auf die Patenterteilung: **08.12.1999**
(21) Anmeldenummer: 94113492.6
(22) Anmeldetag: 30.08.1994
(51) Int. Cl.: B23F 23/12, B24B 53/085

(54) **Verfahren zum Feinbearbeiten von Zahnrädern mit einem innenverzahnten Werkzeug, das zum Abrichten in der Feinbearbeitungsmaschine verbleibt**
Method for finishing gears using a tool in the shape of an internal gear, the tool remaining mounted in the finishing machine while it is being dressed
Procédé pour la finition de roues dentées utilisant un outil sous forme de roue dentée à l'intérieure, l'outil restant monté dans la machine de finissage pendant son dressage

(30) Priorität: 01.09.1993 DE 4329360
(43) Veröffentlichungstag der Anmeldung: 22.03.1995
(73) Patentinhaber: THE GLEASON WORKS, Rochester New York 14692-2970 (US)
(72) Erfinder: Schriefer, Herbert, Dr.-Ing., D-82131 Gauting (DE)
(74) Vertreter: Stahl, Gerhard F.W.

(56) Entgegenhaltungen:
- EP-A- 0 537 107
- DE-U- 8 910 726
- DE-U- 9 300 936
- GB-A- 2 018 178
- WERKSTATT UND BETRIEB., Bd.126, Nr.7, Juli 1993, MUNCHEN DE Seiten 411 - 415 H. SCHRIEFER 'Zahnflanken-Feinbearbeitung für die Grossserienfertigung'

## Beschreibung

Die Erfindung betrifft ein Verfahren nach dem Oberbegriff des Patentanspruchs.

Ein derartiges Verfahren ist aus der EP-A-0 537 107 bekannt. In dieser Druckschrift ist über das Abrichten des Werkzeugs nichts Näheres ausgeführt. Es ist lediglich angegeben, daß das Abrichtzahnrad die gleiche Verzahnungsgeometrie wie das zu schleifende Zahnrad hat, aber zweckmäßig etwas breiter ist.

Die Praxis hat gezeigt, daß beim Abrichten des innenverzahnten Werkzeugs mit einem hartstoffbelegten Abrichtrad, das eine kleinere Kontaktzone hat als die Werkzeugbreite, Probleme entstehen, mit dieser Kontaktzone im freilaufenden Eingriff eine gewünschte Veränderung des Werkzeugschrägungswinkels herbeizuführen. Zur Erhaltung des Gleichgewichts der Kontaktkräfte beim freilaufenden Eingriff ist jedoch eine Veränderung des Schrägungswinkels in Abhängigkeit vom Abrichtzustand und der damit sich verändernden Profilverschiebung zwischen Werkzeug und Werkrad oder Abrichtrad wünschenswert.

Wird die Kontaktzone zwischen Abrichtrad und Werkzeug in Zahnflankenbreitenrichtung verschoben, so kommt es zu Zusatzdrehungen, d.h. die Bahn der Kontaktzone weicht von der durch den vorhandenen Werkzeugschrägungswinkel vorgegebenen Bahn ab. Das Abrichtrad ist weiterhin bestrebt, beim freilaufenden Eingriff dem vorhandenen Werkzeugschrägungswinkel zu folgen. Eine gezielte Veränderung des vorhandenen Werkzeugschrägungswinkels ist somit nicht möglich.

Andererseits hat ein freilaufender Eingriff zwischen Werkrad und innenverzahntem Werkzeug vielfach Vorteile, da von den Werkradflanken nur so viel Material abzutragen ist, wie es für eine zufriedenstellende Funktion des Werkrades erforderlich ist. Es ergeben sich kürzere Bearbeitungszeiten und längere Werkzeugstandzeiten.

Der Erfindung liegt die Aufgabe zugrunde, das gattungsgemäße Verfahren so auszugestalten, daß beim Abrichten des Werkzeugs ein sich laufend ändernder definierter Werkzeugschrägungswinkel mit einem Abrichtrad erzeugbar ist und beim Bearbeiten nur die minimal erforderliche Materialmenge von den Werkradflanken abgetragen wird, die eine Funktionsfähigkeit dieses Bauteils sicherstellt.

Diese Aufgabe wird mit den im kennzeichnenden Teil des Patentanspruchs angegebenen Merkmalen gelöst.

Durch das zwangsgeführte Abrichten ergibt sich als Vorteil, daß das Werkzeug eine sehr exakte Teilungsgeometrie erhält. Beim Bearbeiten der Werkräder übertragt sich diese Teilungsgeometrie innerhalb der Kontaktflächen des überdeckten Werkrad- und Werkzeugbereiches. Auf diese Weise entsteht eine entsprechende Teilungsgeometrie des Werkrades, was wesentlichen Einfluß auf die Funktionalität hat. Beim freilaufenden oder momentgeführten Bearbeiten des Werkrades wird andererseits in Kauf genommen, daß die Teilungssummenabweichungen nicht oder nur bedingt beeinflußbar sind. Diese Abweichungen haben aber nur geringen Einfluß auf die Funktionalität, stellen jedoch bei der Zerspanung große Materialmengen dar, die vielfach über dem eigentlichen Flankenaufmaß liegen können.

Fur die Bestimmung der schrägungswinkelabhängigen Zusatzdrehung ist die genaue Kenntnis der Lage der momentanen Kontaktzone zwischen Abrichtrad- und Werkzeugflanken erforderlich. Dazu wird mit einem mathematischen Modell bestimmt, wie die Achslagen für vorgegebene relative Kontaktpositionen zwischen Werkzeug- und Abrichtradflanken sein müssen. Entsprechend der kontinuierlich sich verändernden axialen Lage der Kontaktzonen an den Werkzeugflanken wird die sich aus dem Zähnezahlverhältnis zwischen Abrichtrad und Werkzeug ergebende Grunddrehung durch eine Zusatzdrehung überlagert.

Das zwangsgeführte Abrichten ist mit Einflanken- oder Zweiflankenkontakt möglich. Beim Einflankenkontakt ergibt sich zwar eine höhere Abrichtzeit, dafür sind aber Korrekturen der Werkzeugrechts- und Linksflanken unabhängig voneinander beeinflußbar. Die exakte Werkzeugzahnweite, die wegen der Hartstoffbelegung des Abrichtrades durch einen Zweiflankenkontakt kompliziert zu erzeugen ist, kann durch eine Relativdrehung Abrichtrad zum Werkzeug kinematisch realisiert werden.

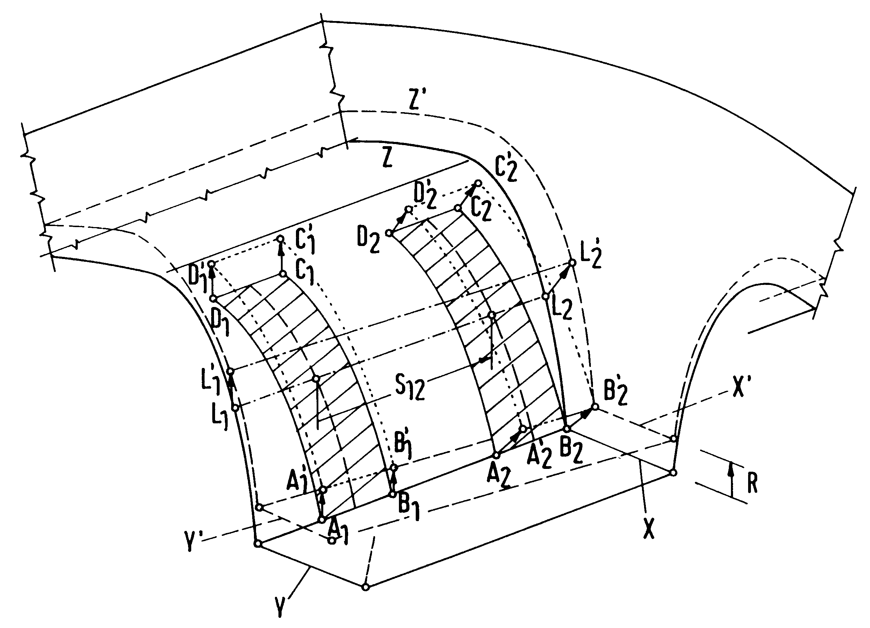

Im folgenden wird mit Hilfe der Fig. 1 der Vorgang des Abrichtens mit elektronischer Zwangsführung gezeigt und der freilaufende Eingriff beim Bearbeiten erläutert.
Fig. 1 stellt einen Zahn Z eines innenverzahnten Werkzeuges vor dem Abrichten und Z' nach dem Abrichten dar. Dabei wird von Z nach Z' der Werkzeugkopfradius um R vergrößert. Die Flankenlinie ist vor dem Abrichten (L₁-L₂) und nach dem Abrichten (L₁-L₂)'. Zwischen diesen beiden Flankenlinien ergibt sich entsprechend verzahnungsgeometrischer Gesetzmäßigkeiten eine vorherbestimmbare Schrägungswinkeländerung des Werkzeugs.

Vor dem Abrichten bewegt sich die Kontaktrone (A,B,C,D)₁ nach (A,B,C,D)₂ durch eine Verschiebung S₁₂ auf der Werkzeugflanke. Das ist der Zustand bei der Bearbeitung im freilaufenden Eingriff zwischen Werkzeug- und Werkradflanken. Durch den Zweiflankeneingriff und die Überdeckung der Kontaktzonen über mehrere Werkradzähne ist es möglich, den vorgegebenen Werkradschrägungswinkel auch mit Kontaktzonen zu erzeugen, die kleiner sind als die Werkradbreite. Das Eingriffsgebiet der Werkzeugzähne bildet sich konjugiert als Eingriffsgebiet der Werkradzähne ab. Der nicht geführte rotatorische Freiheitsgrad zwischen Werkzeug und Werkrad läßt nur zu, daß sich nicht ausgeglichene Drehmomente des rechts-und linksseitigen Zweiflankeneingriffes als Zusatzdrehungen bemerkbar machen, was jedoch durch eine geeignete Werkzeugauslegung weitgehend vermieden wird.

Dieser ausgeglichene Drehmomentenzustand ist nicht beim Abrichten mit gleichzeitiger Schrägungswinkeländerung erzeugbar. Die Kontaktzonen verlagern sich von (A,B,C,D)₁ nach (A,B,C,D)₁' und von (A,B,C,D)₂ nach (A,B,C,D)₂'. Es ist vorstellbar, daß durch eine Kontaktzonen-Relativverschiebung in Werkzeugbreitenrichtung nicht kontrollierbare Zusatzrotationen entstehen, die es ähnlich wie bei der Bearbeitung verhindem, daß eine vorgegebene geänderte Flankenlinie (L₁-L₂)' entsteht. Eine Führung der Kontaktzonen von (A,B,C,D)₁ nach (A,B,C,D)₁' und von (A,B,C,D)₂ nach (A,B,C,D)₂' ist daher nur durch eine Zwangsführung zwischen Werkzeug und Werkrad möglich. Dabei kann die Verlagerung der Kontaktzonen von (A,B,C,D)₁ nach (A,B,C,D)₁' und von (A,B,C,D)₂ nach (A,B,C,D)₂' durch eine Relativverschiebung in drei orthogonal zueinander stehenden Achsen entlang der neu zu erzeugenden Flankenlinie oder durch eine Kombination aus Relativverschiebung und Relativrotation herbeigeführt werden. Die Kontaktzonen (A,B,C,D)_{1,2,1',2'}entsprechen vier momentanen Kontaktzuständen. Beim realen Abrichten ist ein kontinuierliches Einhüllen durch mehrere Abrichthübe in Werkzeugbreitenrichtung erforderlich.

Die Hübe werden so gewählt,daß Anteile der Kontaktzonen über die Werkzeugbreite hinausgehen. In diesen Kontaktzuständen entsteht ein extremes Ungleichsgewicht der rechts-und linksdrehenden Kontaktkräfte, was nur durch ein zwangsgeführtes Abrichten beherrschbar ist.

## Patentansprüche

1. Verfahren zum Feinbearbeiten der Zahnflanken von zahnradförmigen Werkstücken mit einem abrasiven innenverzahnten Werkzeug, das nach jedem Werkstück oder nach mehreren Werkstücken in derselben Aufspannung mit einem Abrichtrad abgerichtet wird, dessen Verzahnung derjenigen der zahnradförmigen Werkstücke entspricht und dessen Zahnflanken mit extrem harten Schleifkörnern belegt sind, wobei das Feinbearbeiten im freien oder im momentgeführten Zweiflankeneingriff zwischen dem innenverzahnten Werkzeug und dem Werkstück erfolgt, dadurch **gekennzeichnet**, daß das Abrichten des innenverzahnten Werkzeugs mit Ein- oder Zweiflankenkontakt zwischen dem Abrichtrad und dem innenverzahnten Werkzeug und mit elektronischer Zwangsführung der Wälz- und Relativbewegungen zwischen dem Abrichtrad und dem innenverzahnten Werkzeug erfolgt und daß beim Abrichten dem rotatorischen Teil der zwangsgeführten Wälzbewegung eine Zusatzdrehung überlagert wird, derart, daß das Abrichtrad in den Kontaktzonen zwischen den Zahnflanken von Werkzeug und Abrichtrad einen vorgegebenen Schrägungswinkel am Werkzeug erzeugt.

## Claims

1. A method of finishing the tooth flanks of gear-type workpieces using an abrasive, internally toothed tool which, after each workpiece or after a plurality of workpieces, is dressed in the same mounting using a dressing wheel, the toothing of which corresponds to that of the gear-type workpieces, and the tooth flanks of which are coated with extremely hard abrasive grains, wherein finishing is carried out with free or load-controlled dual-flank engagement between the internally toothed tool and the workpiece, characterised in that dressing of the internally toothed tool takes place with single- or dual-flank contact between the dressing wheel and the internally toothed tool and with electronic positive control of the rolling and relative movements between the dressing wheel and the internally toothed tool, and in that, during dressing, an additional rotation is superimposed on the rotatory part of the positively controlled rolling movement in such a manner that the dressing wheel generates a predetermined helix angle on the tool in the contact zones between the tooth flanks of the tool and the dressing wheel.

## Revendications

1. Procédé pour la finition de roues dentées utilisant un outil à denture interne abrasive qui, après usinage d'une ou de plusieurs pièces, est dressé tout en restant monté, au moyen d'une roue de dressage dont la denture, correspondant à celle des roues dentées, a ses flancs garnis de grains abrasifs extrêmement durs, la finition s'effectuant pendant la prise à doubles flancs spontanée ou conduite par instants entre l'outil à denture interne et la pièce,
caractérisé en ce que
le dressage de l'outil à denture interne a lieu par contact à un ou deux flancs entre la roue de dressage et la denture interne de l'outil, avec guidage électronique forcé des mouvements de roulement relatifs entre la roue de dressage et l'outil à denture interne, une rotation supplémentaire s'ajoutant, pendant le dressage, à la composante de rotation du mouvement de roulement à guidage forcé de manière que la roue de dressage dans les zones de contact entre les flancs de la denture de l'outil et de la roue de dressage fasse un angle, d'inclinaison par rapport à l'outil.
